# EUROPÄISCHE PATENTANMELDUNG

(11) **EP 3 696 457 A1**
(43) Veröffentlichungstag der Anmeldung: **19.08.2020**
(21) Anmeldenummer: 20156208.9
(22) Anmeldetag: 07.02.2020
(51) Int. Cl.: F16L 21/06, F16L 21/08

(54) **VERBINDUNGSVORRICHTUNG FÜR ROHRE**

(30) Priorität: 18.02.2019 DE 102019104026
(71) Anmelder: E.K. SML Verbindungstechnik GmbH, 42799 Leichlingen (DE)
(72) Erfinder: Bültmann, Paul, 59846 Sundern (DE)
(74) Vertreter: Schäperklaus, Jochen

(57) **Zusammenfassung**

Verbindungsvorrichtung für Rohre, insbesondere für als Abflussrohre verwendbare Gussrohre, umfassend zwei Verbindungsteile (1, 2), die jeweils einen Anlageabschnitt (3) für die Anlage an den zu verbindenden Rohren und einen Verbindungsabschnitt (4) für die Verbindung der Verbindungsteile (1, 2) miteinander aufweisen, wobei mindestens einer der Anlageabschnitte (3) eine Mehrzahl von Haltemitteln (7) für die Halterung der Rohre in der Verbindungsvorrichtung aufweist, und wobei die Haltemittel (7) einstückig mit dem Verbindungsteil (3) ausgebildet sind.

## Beschreibung

Die vorliegende Erfindung betrifft eine Verbindungsvorrichtung für Rohre gemäß dem Oberbegriff des Anspruchs 1.

Eine Verbindungsvorrichtung der vorgenannten Art ist aus der DE 10 2008 010 871 A1 bekannt. Die darin beschriebene Verbindungsvorrichtung für Abflussrohre besteht aus Stahlblech. Jedes der Verbindungsteile weist einen als Hohlzylinderhälfte ausgebildeten Anlageabschnitt auf, der an die Gussrohre anlegbar ist. Von dieser Hohlzylinderhälfte ragen endseitig verdickte Bereiche umfassende Verbindungsabschnitte radial nach außen weg, wobei in diesen verdickten Bereichen Bohrungen und Gewinde für Verbindungsschrauben vorgesehen sind. An jede der als Anlageabschnitt dienende Hohlzylinderhälfte sind innen zwei als Haltemittel dienende Zahnkränze angeschweißt, deren Spitzen nach innen ragen, um die Rohre in der Verbindungsvorrichtung zu halten.

Bei Abflussrohren mit einem großen Durchmesser muss die Verbindungsvorrichtung für große in axialer Richtung wirkende Kräfte ausgelegt sein. Bei der aus dem Stand der Technik bekannten Ausführungsform kann es sich als nachteilig erweisen, dass die Haltemittel mit dem Anlageabschnitt verschweißt sind. Bei großen, die Rohre auseinanderziehenden Kräfte können die Zahnkränze sich von dem Anlageabschnitt lösen. Weiterhin können die Rohre auch bei an dem Anlageabschnitt verbleibendem Zahnkranz aus der Verbindungsvorrichtung herausrutschen, weil die Spitzen der Zähne den Rohren nicht genug Halt bieten.

Das der vorliegenden Erfindung zugrunde liegende Problem ist die Schaffung einer Verbindungsvorrichtung der eingangs genannten Art, die die Rohre auch bei großen axialen Kräften zuverlässig miteinander verbindet.

Dies wird erfindungsgemäß durch eine Verbindungsvorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Haltemittel einstückig mit dem Verbindungsteil ausgebildet sind. Dabei können die Haltemittel beispielsweise als Haltekrallen ausgebildet sein. Durch die einstückige Ausbildung der Haltemittel wird verhindert, dass sich die Haltemittel bei großen axialen Kräften von dem Anlageabschnitt lösen.

Es kann vorgesehen sein, dass zumindest eines, vorzugsweise jedes der Haltemittel durch eine Umbiegung eines Abschnittes des sich im verbundenen Zustand in Umfangsrichtung des Rohres erstreckenden Randes des Anlageabschnitts gebildet wird. Insbesondere kann die Umbiegung eine Umbiegung um 90° sein. Auf diese Weise werden mit einfachen Mitteln stabile Haltemittel geschaffen, die einstückig mit den Anlageabschnitt ausgebildet sind.

Es besteht die Möglichkeit, dass die Haltemittel jeweils eine sich zumindest abschnittsweise in Umfangsrichtung des zu kontaktierenden Rohres erstreckende Kontur aufweist, die im verbundenen Zustand der beiden Verbindungsteile eine Flächenpressung des jeweiligen Haltemittels an einem der Rohre bewirken kann. Durch die Anlage einer sich über eine größere Fläche als die Spitzen der Zahnkränze erstreckenden Kontur an der Außenseite der Rohre werden diese fester in der Verbindungsvorrichtung gehalten.

Beispielsweise kann sich dabei die Kontur über einen Umfangswinkel von mehr als 5°, insbesondere über einen Umfangswinkel von mehr als 10°, vorzugsweise über einen Umfangswinkel zwischen 10° und 15° erstrecken. Dadurch ergeben sich vergleichsweise große, an den Rohren anliegende Flächen, die bei entsprechend starkem Anpressen eine sichere Halterung der Rohre in der Verbindungsvorrichtung gewährleisten.

Es kann vorgesehen sein, dass die Enden der Haltemittel abgekantet sind, insbesondere so, dass sie von einem mittleren Abschnitt der Kontur unter einem Winkel ungleich 0° und ungleich 180°, vorzugsweise nach außen, weg ragen. Durch unter einem Winkel von den Konturen nach außen ragende Abkantungen wird der Halt der Rohre in der Verbindungsvorrichtung weiter verbessert.

Es besteht die Möglichkeit, dass das Verbindungsteil einen verdickten Abschlussbereich in axialer Richtung aufweist, von dem sich die Haltemittel weg erstrecken. Dabei kann der verdickte Abschlussbereich durch eine Umfaltung, insbesondere um 180°, des sich im verbundenen Zustand in Umfangsrichtung des Rohres erstreckenden Randes des Anlageabschnitts des Verbindungsteils gebildet werden. Auf diese Weise kann mit einfachen Mitteln eine größere Stabilität des mit den Haltemitteln versehenen Randabschnitts erreicht werden.

Es kann vorgesehen sein, dass mindestens einer, vorzugsweise ein jeder der Anlageabschnitte mindestens eine Sicke aufweist. Durch die mindestens eine Sicke wird die Stabilität des Anlageabschnitts vergrößert.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Ansicht einer ersten Ausführungsform einer zusammengeschraubten erfindungsgemäßen Verbindungsvorrichtung;
- Fig. 2: eine Draufsicht auf die Verbindungsvorrichtung gemäß Fig. 1;
- Fig. 3: eine Schnittansicht gemäß den Pfeilen III - III in Fig. 2;
- Fig. 4: eine perspektivische Ansicht eines ersten Verbindungsteils der Verbindungsvorrichtung gemäß Fig. 1;
- Fig. 5: eine Draufsicht auf das Verbindungsteil gemäß Fig. 4;
- Fig. 6: eine Schnittansicht gemäß den Pfeilen VI - VI in Fig. 5;
- Fig. 7: eine Schnittansicht gemäß den Pfeilen VII - VII in Fig. 5;
- Fig. 8: eine gegenüber Fig. 4 um 180° gedrehte perspektivische Ansicht des Verbindungsteils
- Fig. 9: eine perspektivische Ansicht einer zweiten Ausführungsform einer zusammengeschraubten erfindungsgemäßen Verbindungsvorrichtung;
- Fig. 10: eine Draufsicht auf ein erstes Verbindungsteil der Verbindungsvorrichtung gemäß Fig. 9;
- Fig. 11: eine Schnittansicht gemäß den Pfeilen XI - XI in Fig. 10;
- Fig. 12: eine Schnittansicht gemäß den Pfeilen XII - XII in Fig. 10.

In den Figuren sind gleiche und funktional gleiche Teile mit gleichen Bezugszeichen versehen.

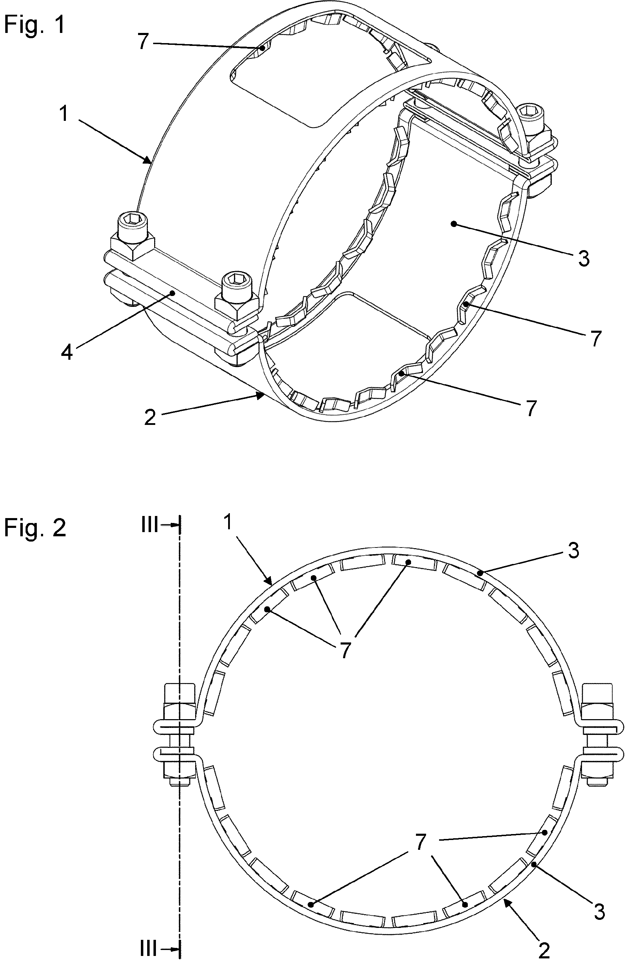

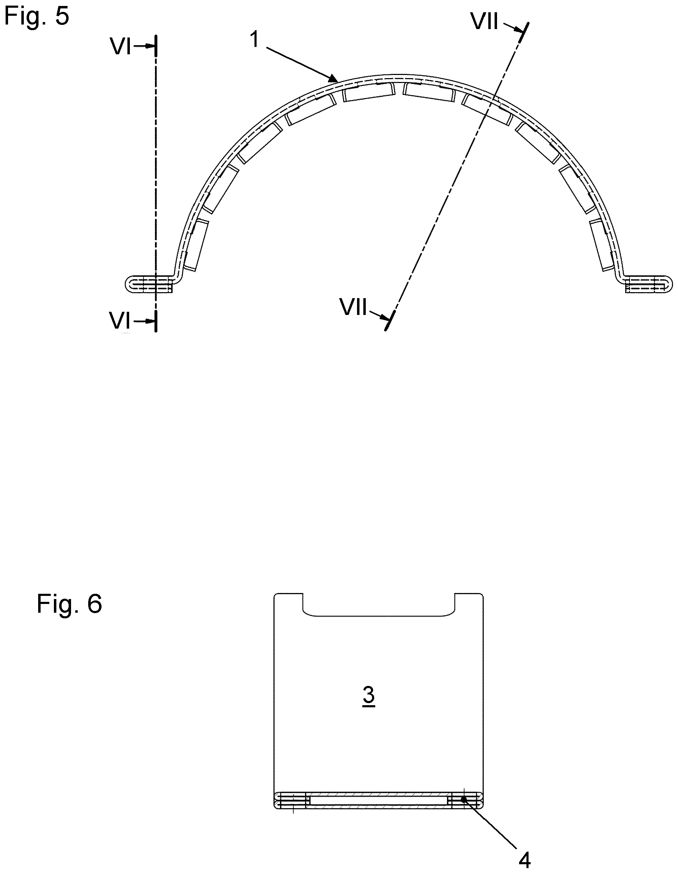

Eine erfindungsgemäße Verbindungsvorrichtung dient dazu, zwei nicht abgebildete Gussrohre miteinander zu verbinden. Die in den Fig. 1 bis Fig. 8 abgebildete erste Ausführungsform einer erfindungsgemäßen Verbindungsvorrichtung umfasst zwei Verbindungsteile 1, 2, die um die Gussrohre herum gelegt und miteinander verschraubt werden können. Fig. 1 bis Fig. 3 zeigen die Verbindungsvorrichtung im miteinander verbundenen Zustand der beiden Verbindungsteile 1, 2. In die Zeichenebene der Fig. 2 hinein beziehungsweise aus der Zeichenebene der Fig. 2 heraus erstrecken sich im Betriebszustand die miteinander zu verbindenden Rohre. Die Verbindungsteile 1, 2 bestehen aus Stahlblech.

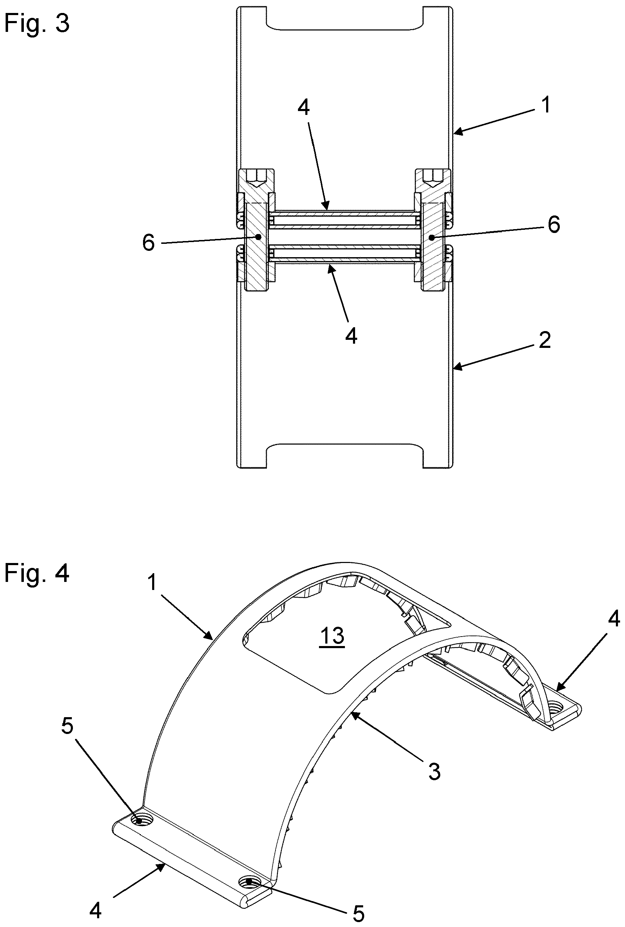

Die Fig. 4 bis Fig. 8 zeigen eines der Verbindungsteile 1, 2, insbesondere das erste Verbindungsteil 1. Die Verbindungsteile 1, 2 sind im Wesentlichen Stanzbiegeteile. Die Verbindungsteile 1, 2 weisen einen Anlageabschnitt 3 für die Anlage an den zu verbindenden Rohren und zwei an dessen Ende angeordnete Verbindungsabschnitte 4 auf (siehe Fig. 4). Der Anlageabschnitt 3 ist als Hohlzylinderhälfte ausgebildet und weist etwa mittig eine fensterähnliche Öffnung 13 auf. Die Verbindungsabschnitte 3 erstrecken sich von dem Anlageabschnitt 3 radial nach außen.

Insbesondere Fig. 2, Fig. 4 und Fig. 5 ist entnehmbar, dass die Verbindungsabschnitte 4 gegenüber dem Material des Abschnitts 3 verdickt sind, weil sie durch eine Umfaltung um 180° gebildet sind. Die Verbindungsabschnitte 4 weisen somit eine in Fig. 2, Fig. 3 und Fig. 5 untere Lage und eine obere Lage auf, die aufgrund der Umfaltung aufeinander angeordnet sind. Durch diese Umfaltung ergibt sich eine Verstärkung der Verbindungsabschnitte 4.

Weiterhin ist in den axialen Endbereichen der Verbindungsabschnitte 4 des ersten Verbindungsteils 1 jeweils eine Gewindebohrung 5 vorgesehen, durch die sich jeweils eine Schraube 6 zur Verbindung der beiden Verbindungsteile 1, 2 erstrecken kann (siehe Fig. 3 und Fig. 4). Das zweite Verbindungsteil 2 entspricht im Wesentlichen dem ersten Verbindungsteil 1, so dass für gleiche oder funktional gleiche Teile die gleichen Bezugszeichen verwendet werden. Das zweite Verbindungsteil 2 umfasst anstelle der Gewindebohrung 5 ein Verbindungsloch, durch das sich die Schraube 6 hindurch erstrecken kann.

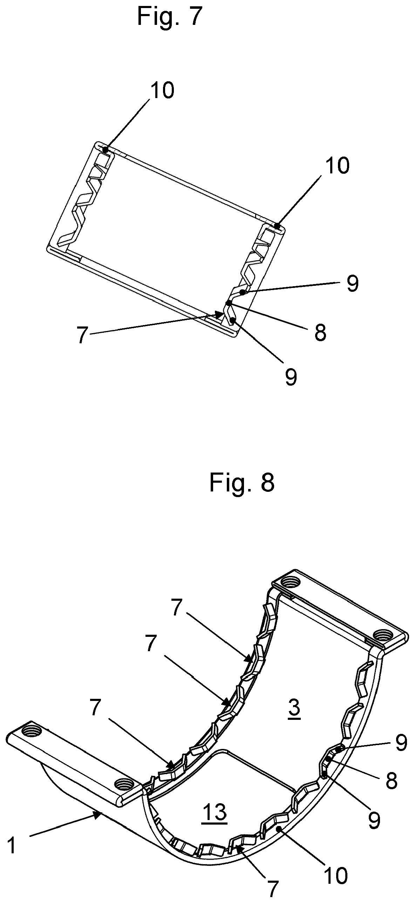

Beide Verbindungsteile 1, 2 weisen an den Innenseiten ihrer Anlageabschnitte 3 eine Mehrzahl von Haltemitteln 7 auf, die einstückig mit dem Anlageabschnitt 3 ausgebildet sind. Die einzelnen Haltemittel 7 sind dabei in Umfangsrichtung des als Hohlzylinderhälfte ausgebildeten Anlageabschnitts 3 nebeneinander angeordnet und erstrecken sich im zusammen im Wesentlichen über den gesamten Umfang der Hohlzylinderhälfte (siehe beispielsweise Fig. 2 und Fig. 8).

Ein jedes der Haltemittel 7 ist dabei als Haltekralle ausgebildet und erstreckt sich von dem Anlageabschnitt 3 in radialer Richtung nach innen und somit in Richtung auf die zu verbindenden Rohre. Die Haltemittel 7 weisen eine Kontur auf, die sich zumindest teilweise in einem mittleren Abschnitt 8 in Umfangsrichtung der Hohlzylinderhälfte erstreckt. An den mittleren Abschnitt 8 schließen sich abgekantete Enden 9 an, die in axialer Richtung nach außen von dem mittleren Abschnitt 8 weg ragen (siehe beispielsweise Fig. 7 und Fig. 8).

Die einstückige Ausbildung mit dem Verbindungsteil 1, 2 beziehungsweise dem Anlageabschnitt 3 wird dadurch erreicht, dass jedes der Haltemittel 7 durch eine Umbiegung um 90° eines Abschnittes des sich in Umfangsrichtung der Hohlzylinderhälfte erstreckenden Randes des Anlageabschnitts 3 gebildet wird. Dabei weist der sich in Umfangsrichtung der Hohlzylinderhälfte erstreckende Rand zusätzlich einen durch eine Umfaltung um 180° realisierten verdickten Abschlussbereich 10 auf (siehe beispielsweise Fig. 7 und Fig. 8), so dass der Bereich, von dem sich die Haltemittel 7 weg erstrecken, verstärkt ist.

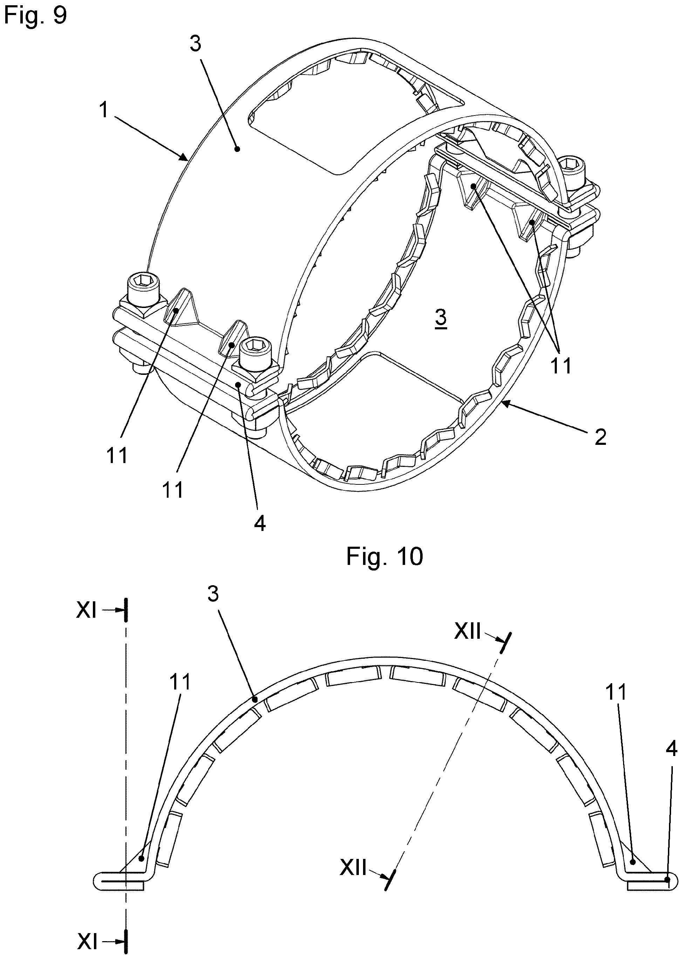

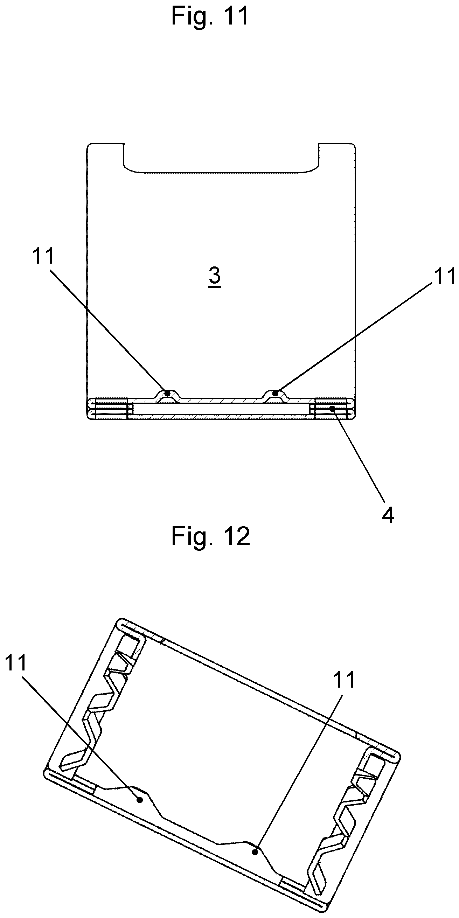

Die in den Fig. 9 bis Fig. 12 abgebildete zweite Ausführungsform einer erfindungsgemäßen Verbindungsvorrichtung entspricht im Wesentlichen der ersten Ausführungsform. Der einzige Unterschied besteht darin, dass ein jeder der Anlageabschnitte 3 in einem jeden der Übergangsbereiche zu den Verbindungsabschnitten 4 jeweils zwei Sicken 11 aufweist. Die Sicken 11 sind jeweils parallel zueinander und ragen von dem Anlageabschnitt 3 nach außen.

## Patentansprüche

1. Verbindungsvorrichtung für Rohre, insbesondere für als Abflussrohre verwendbare Gussrohre, umfassend zwei Verbindungsteile (1, 2), die jeweils einen Anlageabschnitt (3) für die Anlage an den zu verbindenden Rohren und einen Verbindungsabschnitt (4) für die Verbindung der Verbindungsteile (1, 2) miteinander aufweisen, wobei mindestens einer der Anlageabschnitte (3) eine Mehrzahl von Haltemitteln (7) für die Halterung der Rohre in der Verbindungsvorrichtung aufweist, **dadurch gekennzeichnet, dass** die Haltemittel (7) einstückig mit dem Verbindungsteil (3) ausgebildet sind.

2. Verbindungsvorrichtung nach Anspruch 1, **dadurch gekennzeichnet, dass** die Haltemittel (7) als Haltekrallen ausgebildet sind.

3. Verbindungsvorrichtung nach einem der Ansprüche 1 oder 2, **dadurch gekennzeichnet, dass** zumindest eines, vorzugsweise jedes der Haltemittel (7) durch eine Umbiegung eines Abschnittes (12) des sich im verbundenen Zustand in Umfangsrichtung des Rohres erstreckenden Randes des Anlageabschnitts (3) gebildet wird.

4. Verbindungsvorrichtung nach Anspruch 3, **dadurch gekennzeichnet, dass** die Umbiegung eine Umbiegung um 90° ist.

5. Verbindungsvorrichtung nach einem der Ansprüche 1 bis 4, **dadurch gekennzeichnet, dass** die Haltemittel (7) jeweils eine sich zumindest abschnittsweise in Umfangsrichtung des zu kontaktierenden Rohres erstreckende Kontur aufweist, die im verbundenen Zustand der beiden Verbindungsteile (1, 2) eine Flächenpressung des jeweiligen Haltemittels (7) an einem der Rohre bewirken kann.

6. Verbindungsvorrichtung nach Anspruch 5, **dadurch gekennzeichnet, dass** die Kontur sich über einen Umfangswinkel von mehr als 5°, insbesondere über einen Umfangswinkel von mehr als 10°, vorzugsweise über einen Umfangswinkel zwischen 10° und 15° erstreckt.

7. Verbindungsvorrichtung nach einem der Ansprüche 1 bis 6, **dadurch gekennzeichnet, dass** die Enden (9) der Haltemittel (7) abgekantet sind, insbesondere so, dass sie von einem mittleren Abschnitt (8) der Kontur unter einem Winkel ungleich 0° und ungleich 180°, vorzugsweise nach außen, weg ragen.

8. Verbindungsvorrichtung nach einem der Ansprüche 1 bis 7, **dadurch gekennzeichnet, dass** das Verbindungsteil (1, 2) einen verdickten Abschlussbereich (10) in axialer Richtung aufweist, von dem sich die Haltemittel (7) weg erstrecken.

9. Verbindungsvorrichtung nach Anspruch 8, **dadurch gekennzeichnet, dass** der verdickte Abschlussbereich (10) durch eine Umfaltung, insbesondere um 180°, des sich im verbundenen Zustand in Umfangsrichtung des Rohres erstreckenden Randes des Anlageabschnitts (3) des Verbindungsteils (1, 2) gebildet wird.

10. Verbindungsvorrichtung nach einem der Ansprüche 1 bis 9, **dadurch gekennzeichnet, dass** mindestens einer, vorzugsweise ein jeder der Anlageabschnitte (3) mindestens eine Sicke (11) aufweist.
